# EUROPEAN PATENT SPECIFICATION

(11) **EP 2 802 710 B1**
(45) Date of publication and mention of the grant of the patent: **17.08.2016**
(21) Application number: 13744849.4
(22) Date of filing: 07.01.2013
(51) Int. Cl.: D21H 13/26, D21H 17/02, D21H 17/00, D21H 21/18, D21H 21/34, B32B 3/12

(54) **CORE STRUCTURES COMPRISING TANNIN RESIN**
KERNSTRUKTUREN MIT TANNINHARZ
STRUCTURES DE NOYAU COMPRENANT UNE RÉSINE DE TANIN

(30) Priority: 12.01.2012 US 201261585831 P
(43) Date of publication of application: 19.11.2014
(73) Proprietor: E. I. du Pont de Nemours and Company, Wilmington, DE 19898 (US)
(72) Inventor: CONLEY, Jill A., Midlothian, Virginia 23114 (US); LEVIT, Mikhail R., Glen Allen, Virginia 23059 (US); SIEMIONKO, Roger K., Midlothian, Virginia 23113 (US)
(74) Representative: Heinemann, Monica
(86) International application number: PCT/US2013/020474
(87) International publication number: WO 2013/154619

(56) References cited:
- EP-A1- 0 467 286
- EP-A1- 1 547 739
- WO-A2-2011/062980

## Description

### 1. Field of the Invention.

This invention relates to a high strength core structure made from a fibrous web. The core structure may be in the form of a honeycomb or a folded core.

### 2. Description of Related Art.

High strength core structures for sandwich panels made from fibrous webs, mostly in the form of honeycomb, are used in different applications but primarily in the aerospace and mass transportation industries where strength to weight or stiffness to weight ratios have high values. The final structure usually comprises a fibrous web and a matrix resin.

For example, US Patent 5,137,768 to Lin describes a honeycomb core made from a high-density wet-laid nonwoven fibrous web comprising 50 weight percent or more of p-aramid fiber with the rest of the composition being a binder and other additives. The final honeycomb comprises the described web and a matrix resin and has a high shear modulus.

Different matrix resins and their combinations have been described for the use in honeycomb structures. For example, US Patent 6,245,407 to Wang et al describes resins which are a combination of phenolic and polyamide polymers that are used as dipping resins to coat honeycomb structures.

European Patent Application EP 0 467 286 A1 discloses a light weight honeycomb structure made from aramid fibers and exhibiting extremely high shear modulus. WO 2011/062980 A2 describes a honeycomb core made from paper comprising 20 - 85 wt% of carbon fiber floc.

There is a continuing need to improve the flame resistance of core structures without sacrificing other safety features of the core, its mechanical properties and process economics. This is particularly true for structures used in the interiors of aircraft, trains, and boats.

This invention is directed to a structural core comprising a fibrous web and a matrix resin, the matrix resin comprising from 15 to 75 weight percent of the weight of web plus resin, the matrix resin contains:
(i) a first resin which is a tannin comprising 10 to 100 weight percent of the matrix resin; and
(ii) a second resin in the event tannin is not present in an amount of 100 weight percent.

The invention is further directed to a composite panel containing a core structure.

### BRIEF DESCRIPTION OF THE DRAWINGS

Figures 1A and 1B are representations of views of a hexagonal shaped honeycomb.
Figure 2 is a representation of another view of a hexagonal cell shaped honeycomb.
Figure 3 is an illustration of honeycomb provided with facesheet(s).
Figure 4 is an illustration of a folded core structure.

### DETAILED DESCRIPTION OF THE INVENTION

This invention is directed to a structural core comprising a fibrous web and a matrix resin, the matrix resin comprising from 15 to 75 weight percent of the weight of web plus resin, the matrix resin contains:
(i) a first resin which is a tannin comprising 10 to 100 weight percent of the matrix resin and
(ii) a second resin the event tannin is not present in an amount of 100 weight percent.

A preferred second resin is phenolic, benzoxazine, polyester, cyanate ester, bismaleimide, epoxy, polyimide or combination thereof.

The core structure may be in the form of a honeycomb or a folded core. The invention is further directed to a composite panel containing a core structure.

It was surprisingly found that a partial or full replacement of phenolic resin of the prior art by tannin in the composition of the matrix resin a the core structure not only increased flame retardency of the final structure, (based on limited oxygen index values), but also improved mechanical properties of the core.

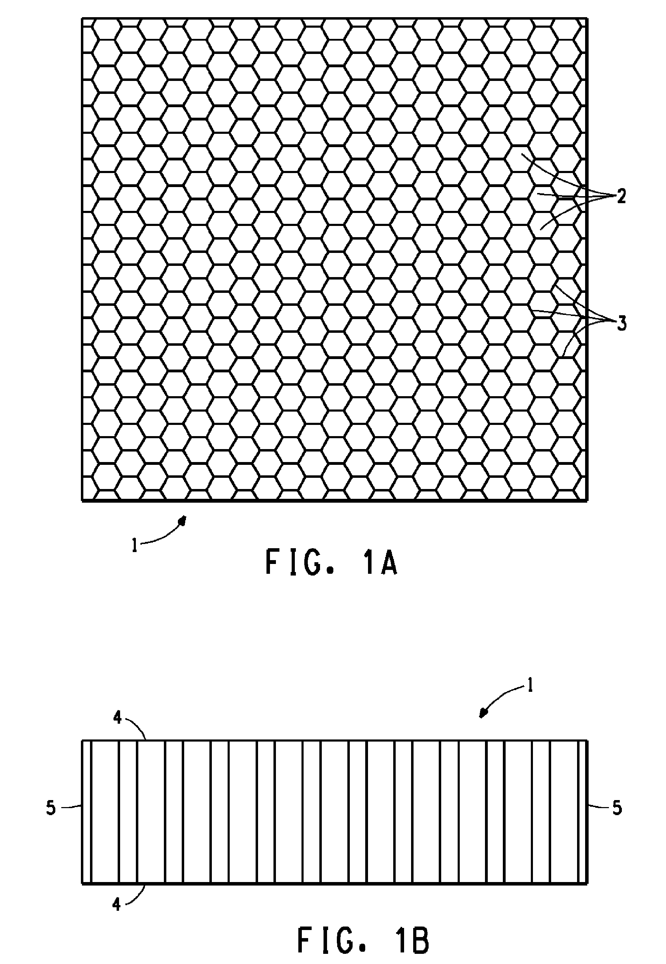

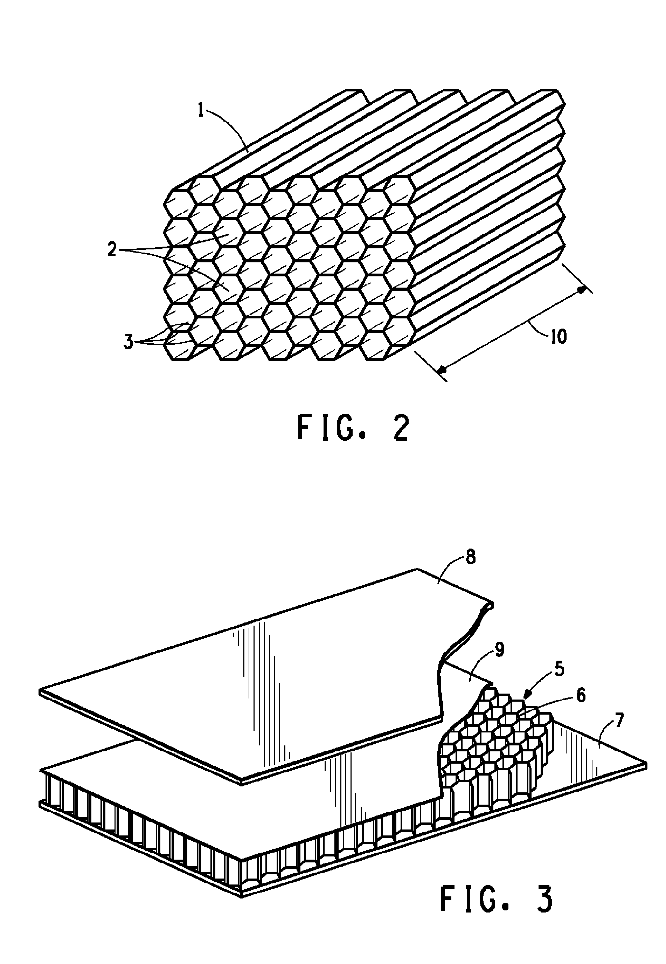

Figure 1A is a plan view illustration of one honeycomb 1 of this invention and shows cells 2 formed by cell walls 3. Figure 1B is an elevation view of the honeycomb shown in Figure 1A and shows the two exterior surfaces, or faces, 4 formed at both ends of the cell walls. The core also has edges 5. Figure 2 is a three-dimensional view of the honeycomb. Shown is honeycomb 1 having hexagonal cells 2 and cell walls 3. The "T" dimension or the thickness of the honeycomb is shown at 10 in Figure 2. Hexagonal cells are shown; however, other geometric arrangements are possible with square, over-expanded and flex-core cells being among the most common possible arrangements. Such cell types are well known in the art and reference can be made to Honeycomb Technology pages 14 to 20 by T. Bitzer (Chapman & Hall, publishers, 1997) for additional information on possible geometric cell types.

Figure 3 shows a structural sandwich panel 5 assembled from a honeycomb core 6 with face sheets 7 and 8, attached to the two exterior surfaces of the core. The preferred face sheet material is a prepreg, a fibrous sheet impregnated with thermoset or thermoplastic resin although metallic face sheets may also be utilized. With metallic face sheets, and in some circumstances with prepreg, an adhesive film 9 is also used. Normally there are at least two prepreg skins on either side of the core.

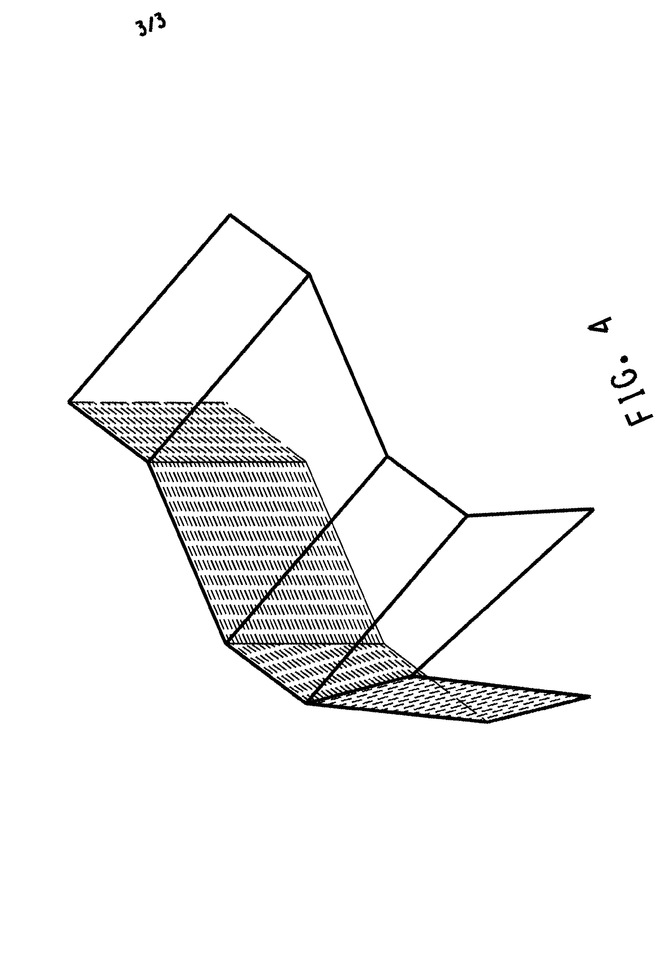

Figure 4 shows a folded core structure which is a 3-dimensional structure of folded geometric patterns folded from a relatively thin planar sheet material. Such folded or tessellated sheet structures are discussed in US patents 6,935,997 B2 and 6,800,351 B1. A chevron is a common pattern for three dimensional folded tessellated core structures. Such structures are different from honeycomb structures. A preferred tessellated folded structure is of the type described in United States patent number 6,913,570 B2 and United States patent publication number 20100048078.

In some embodiments, the fibrous web is a nonwoven sheet that may be in the form of a paper or a randomly oriented discontinuous or continuous fiber mat.

The paper can be made from natural fibers such as wood pulp, cellulose, cotton and the like, from synthetic fibers or from their combination.

Examples of wood pulp paper include bleached and unbleached glassine papers and kraft paper.

A paper from synthetic fibers usually contains synthetic fibers and a binder. In one embodiment, such paper comprises from 10 to 100 weight percent fibers and correspondingly from 0 to 90 weight percent binder. In another embodiment the paper comprises from 10 to 85 weight percent fibers and from 15 to 90 weight percent binder. In yet another embodiment the paper comprises from 50 to 100 weight percent fibers and from 0 to 50 weight percent binder.

In some embodiments, the paper comprises synthetic fibers having a tenacity of at least 3 grams per dtex. Examples of such fibers are meta-aramid fibers and poly(ethylenetherephtalamide) fibers.

In other embodiments, the paper comprises synthetic fibers having a tenacity at least 11 grams per dtex Examples of such fibers are glass fibers, para-aramid fibers, and carbon fibers.

The fibrous web and matrix resin can contain small amounts of inorganic particles and representative particles include mica, vermiculite, and the like. The addition of these performance enhancing additives is to impart properties such as improved fire resistance, thermal conductivity, dimensional stability and the like to the final core structure.

Fibers may be in the form of cut fiber (floc) or pulp either used alone or in combination.

Floc is generally made by cutting continuous spun filaments into specific-length pieces. If the floc length is less than 0.5 millimeters, it is generally too short to provide a paper with adequate strength. If the floc length is more than 26 millimeters, it is very difficult to form uniform wet-laid webs. Floc having a diameter of less than 5 micrometers, and especially less than 3 micrometers, is difficult to produce with adequate cross sectional uniformity and reproducibility. If the floc diameter is more than 20 micrometers, it is very difficult to form uniform papers of light to medium basis weights.

The term "pulp", as used herein, means particles of fibrous material having a stalk and fibrils extending generally therefrom, wherein the stalk is generally columnar and about 10 to 50 micrometers in diameter and the fibrils are fine, hair-like members generally attached to the stalk measuring only a fraction of a micrometer or a few micrometers in diameter and about 10 to 100 micrometers long. One possible illustrative process for making aramid pulp is generally disclosed in United States Patent No. 5,084,136.

A preferred binder for the papers comprising synthetic fibers for the core structures of this invention is fibrids. The term "fibrids" as used herein, means a very finely-divided polymer product of small, filmy, essentially two-dimensional particles having a length and width on the order of 100 to 1000 micrometers and a thickness on the order of 0.1 to 1 micrometer. Fibrids are typically made by streaming a polymer solution into a coagulating bath of liquid that is immiscible with the solvent of the solution. The stream of polymer solution is subjected to strenuous shearing forces and turbulence as the polymer is coagulated. Preparation of fibrids is taught in U.S. Pat. No. 3,756,908 with a general discussion of processes to be found in U.S. Pat. No. 2,999,788. The fibrids should be refined in accordance with the teachings of U.S. Pat. No. 3,756,908 patent only to the extent useful to permit permanent densification and saturability of the final paper.

Preferable polymers for fibrids in this invention include aramids (poly (m-phenylene isophthalamide) and poly (p-phenylene terephthalamide)). Other binders include polysulfonamide (PSA), polyphenylene sulfide (PPS), and polyimides. Other binder materials are in the general form of resins and can be epoxy resins, phenolic resins, polyureas, polyurethanes, melamine formaldehyde resins, polyesters, polyvinyl acetates, polyacrylonitriles, alkyd resins, and the like. Preferred resins are water dispersible and thermosetting. Most preferred resin binders comprise water-dispersible epoxy resins.

The composition of both fibers and fibrids can vary. Preferable types of fibers include aromatic polyamide, liquid crystal polyester, polybenzazole, polypyridazole , polysulfonamide, polyphenylene sulfide, polyolefins, carbon, glass and other inorganic fibers or mixture thereof.

Preferable types of fibrids include aromatic polyamide, polysulfonamide (PSA), poly-phenylene sulfide (PPS), and polyimide.

Suitable aromatic polyamides are meta-aramid and para-aramid. A suitable meta-aramid polymer is poly (m-phenylene isophthalamide) and a suitable para-aramid polymer is poly (p-phenylene terephthalamide).

Papers made using fibrids and short fibers have been described in US Patent No. 3,756,908, to Gross and US Patent No. 5,137,768 to Lin.

Commercially available paper webs for the production of core structures from synthetic fibers are Nomex(R) T412 and Kevlar® N636 papers sold by E. I. DuPont de Nemours and Company, Wilmington, DE.

In addition to being made from natural or synthetic fibers, a paper web for the cores of this invention may also comprise a blend of natural and synthetic fibers, for example aramid and wood pulp fibers.

Once the paper is formed, it is calendered to the desired density or left uncalendered depending on the target final density.

In other embodiments, the fibrous reinforcement web is a non-woven mat comprising randomly oriented discontinuous filaments in which the filaments are bonded or interlocked. A felt is an example of a nonwoven mat.

In other embodiments, the fibrous reinforcement web is a fabric material comprising continuous filament yarns. By fabric is meant structures that may be woven, unidirectional or may be multiaxial. Each of these fabric styles is well known in the art. A multitude of different fabric weave patterns including plain, twill, satin, crowfoot satin, plain derivative, leno and mock leno may be used. Plain weave patterns are preferred. Carbon, aramid or glass fibers are preferred fibers for the fabrics. The yarns can be intertwined and/or twisted. For purposes herein, the term "filament" is defined as a relatively flexible, macroscopically homogeneous body having a high ratio of length to width across its cross-sectional area perpendicular to its length. The filament cross section can be any shape, but is typically circular or bean shaped. Herein, the term "fiber" is used interchangeably with the term "filament". A "yarn" is a plurality of filaments. The filaments can be any length. Multifilament yarn spun onto a bobbin in a package contains a plurality of continuous filaments. The multifilament yarn can be cut into staple fibers and made into a spun staple yarn suitable for use in the present invention. The staple fiber can have a length of about 1.5 to about 5 inches (about 3.8 cm to about 12.7 cm). The staple fiber can be straight (i.e., non crimped) or crimped to have a saw tooth shaped crimp along its length, with a crimp (or repeating bend) frequency of about 3.5 to about 18 crimps per inch (about 1.4 to about 7.1 crimps per cm).

The surface of the fibrous web in the structural core of this invention is coated with a matrix resin. In some embodiments, the resin impregnates into the web. The matrix resin comprises tannin. In addition, the matrix resin can comprise other resins. Suitable other resins include phenolic, epoxy, polyester, cyanate esters, bismaleimide, polyamide, benzoxazine, and polyimide resins. In some embodiments, the resin is a blend of a tannin resin (a first resin) and a phenolic or epoxy or polyimide resin (a second resin). It was discovered that use of the combined phenolic / tannin coating resin not only increases the flame resistance of the core, but also increases the overall mechanical performance of the material of the core including its stiffness, strength, and toughness. In one embodiment, the coating resin is a resin solution comprising from 10 to 90 weight percent of a first resin and from 90 to 10 weight percent of a second resin based on the total weight of first plus second resin. When the resin impregnation of the web is conducted prior to core forming it is preferred that the resin is partially cured. Such a partial curing process, known as B-staging, is well known in the composite materials industry. By B-stage we mean an intermediate stage in the polymerization reaction in which the resin softens with heat and is plastic and fusible but does not entirely dissolve or fuse. The B-staged reinforcing web is still capable of further processing into the desired core shape.

When the resin impregnation is conducted after the core has been formed (expanded), it is normally done in a sequence of repeating steps of dipping followed by solvent removal and curing of the resin. The preferred final core densities (nonwoven sheet plus resin) are in the range of 20 to 150 kg/m³. During the resin impregnation process, resin is absorbed into and coated onto the fibrous web.

The coating resin is applied to the core in accordance with known block dipping or web coating procedures.

If phenolic resins are used as a matrix resin, they normally comply with United States Military Specification MIL-R-9299C. Preferably, the resin is a phenol formaldehyde resin and may be a resole or a novolac resin. Other aldehydes, for example furfuraldehyde, may be used, and other phenols for example hydroquinone and p-cresol may also be used. The preparation of p-cresol and properties of such resins are described in "Phenolic Resins," authors A. Knop and L. A. Pilato, Springer-Verlag, Berlin, 1985. A resole resin is cured simply by the application of heat whereas a novolac resin requires for its cure the additional presence of a formaldehyde generating substance, for example hexamethylenetetramine, also known as hexamine. Resole type resins are preferred. Suitable phenolic resins are available from companies such Hexion Specialty Chemicals, Columbus, OH or Durez Corporation, Detroit, MI.

The tannin resin may be bio-derived vegetable-based, extracted from leaf, bud, seed, root, trunk, and stem tissues. Suitable bio-derived tannin includes mimosa, tupafin, acacia, black wattle, quebracho, chestnut, oak, pine, tara, catechu tannin, or mixtures thereof. In another embodiment, the tannin may be synthetic. Synthetic tannins are also known as syntans. Exemplary syntans include, but are not limited to, sulfonated phenol-formaldehyde resins, sulfonated melamine-formaldehyde resin, sulfonated naphtalene-formaldehyde resins. In some embodiments the tannin is gallic acid, flavone or phloroglucinol. The tannin may be dried at a temperature in the range of 50-200 °C, or 80-150 °C, or 90-120 °C for an amount of time in the range of 1-7 days, or 1-5 days, or 1-3 days before the step of mixing the tannin with the phenolic resin. In another embodiment, the tannin is used as is.

The resins may be used as solutions or dispersions in solvents or dispersion media, for example water, acetone, propan-2-ol, butanone, ethyl acetate, ethanol, and toluene. Mixtures of these solvents may be used to achieve acceptable evaporation rates of the solvent from the core. The amount of solvent used will vary widely depending upon a number of factors including the type of core material being used. In general, the solvents should be added in conventional amounts to provide a resin solution which may be easily applied in accordance with known processes.

The amount of resin coating which is applied will vary depending upon a number of factors. For example, non-woven materials which are relatively porous will require more resin in order to achieve adequate wetting of the honeycomb walls. For relatively non-porous core materials, it is preferred that a sufficient amount of resin be applied to the material to provide coating thicknesses on the order of 0.0025 to 0.125 mm (0.1 to 5 mils). In one embodiment the coating resin comprises from 15 to 70 weight percent of the total weight of web plus coating resin.

When the reinforcing web is fabricated into a honeycomb core structure there are two principal methods of manufacture, expansion or corrugation. Expansion methods are commonly used for paper webs and corrugation methods for fabric webs. Both methods are well known in the art and are further detailed on page 721 of the Engineered Materials Handbook, Volume 1 - Composites, ASM International, 1988.

Thermoplastic honeycomb may be made by welding techniques such as heat or ultrasonic forming. Such methods are described in United States patent numbers 5,039,567; 5,421,935 and 5,217,556.

In some embodiments, prior to the expansion or corrugation processes, the web may be coated with a first amount of coating resin with the remainder being applied in a second amount after honeycomb formation.

When the reinforcing web is fabricated into a folded core structure, different production techniques are required. Processes for converting web substrates into folded core structures are described in US patents 6,913,570 B2 and 7,115,089 B2 as well as US patent application 2007/0141376. In some embodiments, all of the coating resin is applied after folded core formation while in other embodiments the web substrate is coated with a first amount of coating resin prior to forming of the core with the remainder being applied in a second amount after core formation.

Methods for coating the webs before and after core formation are well known in the art.

The thickness of the reinforcement web is dependent upon the end use or desired properties of the honeycomb core and in some embodiments is typically from 75 to 500 micrometers (3 to 20 mils) thick. In some embodiments, the basis weight of the web is from 15 to 200 grams per square meter (0.5 to 6 ounces per square yard).

Core structures of the above invention may be used to make composite panels having facesheets bonded to at least one exterior surface of the core structure. The facesheet material can be a plastic sheet or plate, a fiber reinforced plastic (prepreg) or metal. The facesheets are attached to the core structure under pressure and usually with heat by an adhesive film or from the resin in the prepreg. The curing is carried out in a press, an oven or an autoclave. Such techniques are well understood by those skilled in the art.

### TEST METHODS

The average Limiting Oxygen Index (LOI) was determined according to ASTM D2863-10, approved August 1, 2010.

Resin pickup was determined by comparing dry weight of the sample before and after resin application and calculating resin weight percent in the total weight of the raw paper plus the cured resin.

Tensile properties of resin treated papers were determined in accordance with ASTM D828.

Specific stiffness was calculated as the arithmetic average tensile stiffness values between the machine and the cross direction of the coated or impregnated paper, divided by the basis weight of the coated paper. Machine and cross directions are both well-known terms of art.

Reported Tensile Index for coated or impregnated paper is the arithmetic average between tensile index values in the machine and cross direction of the coated or impregnated paper.

Specific tensile toughness was calculated as the arithmetic average area under the load-elongation curve in testing of coated or impregnated paper in the machine and cross directions, divided by the basis weight of the coated or impregnated paper.

### EXAMPLES

The following examples pertain to flat sheets of resin coated paper. The mechanical and flame resistance properties of such papers will be indicative of how they will perform in honeycomb cell walls or as a folded core structure.

All parts and percentages are by weight unless otherwise indicated. All temperatures are in degrees C unless otherwise indicated. Examples prepared according to the current invention are indicated by numerical values. Control or Comparative Examples are indicated by letters.

### Examples 1 and 2

In Examples 1 and 2, kraft paper with a basis weight of 109 gsm (3.2 oz/yd²), thickness 0.15 mm (6.1 mils) and Gurley air resistance 34 seconds per 100 ml was dipped into a bath comprising a blend of tannin and phenolic resins. The relative amount of both resins is shown in Table 1. The tannin resin used was Mimosa OP as sold by Silvateam, San Michele, Italy. Phenolic resin was water based resin type GP 7648 sold by Georgia Pacific Resins, Inc. The resin composition on the paper was then cured by heating the coated paper in an oven for a total of 2.5 hours in incremental steps of fifteen minutes at 82 degrees C, fifteen minutes at 121 degrees C and two hours at 182 degrees C. The amount of resin that was applied to the paper is shown as final percent pickup in Table 1.

### Example A

Example A was prepared as for Example 1 except that only the phenolic resin was used. The resin pickup was 31% by weight.

The coated/saturated papers from Examples A, 1 and 2 were cut into strips and tested to determine the minimum oxygen concentration to support combustion. A minimum of three samples was tested for each example. The average LOI is reported in Table 1.

**Table 1**

| Example | % Tannin | % Phenolic | Final % Resin Pickup | Average LOI |
|---|---|---|---|---|
| 1 | 2 | 98 | 35 | 26.5 |
| 2 | 10 | 90 | 34 | 27.3 |
| A | 0 | 100 | 31 | 24 |

### Example 3

In Example 3, Kevlar® 1.8N636 paper available from E. I. DuPont de Nemours & Co., Wilmington, DE, was dipped into a bath comprising a blend of 25 weight percent tannin resin and 75 weight percent phenolic resin (based on solids). The paper was then cured as per Example 1. The final resin pickup was 42 weight percent.

### Example B

Example B was prepared as for Example 3 except that only the phenolic resin was used. The resin pickup was 41 % by weight.

The coated/saturated papers from Examples B and 3 were cut into strips and tested to determine the minimum oxygen concentration to support combustion. A minimum of three samples was tested for each example. The average LOI is reported in Table 2.

**Table2**

| Example | % Tannin | % Phenolic | Final % Resin Pickup | Average LOI |
|---|---|---|---|---|
| 3 | 25 | 75 | 42 | 30 |
| B | 0 | 100 | 41 | 26 |

### Example 4

The kraft paper as used in Example 1 was dipped into a bath comprising a resin blend of 30 weight percent tannin resin and 70 weight percent phenolic resin (based on solids). Tannin and phenolic resins were the same as in Example 1. The paper was then cured as per Example 1. The resin pick up was 36.1 weight percent. The final composite structure was then cut into strips having a length of 203.2 mm (8 inches) and a width of 25.4 mm (1 inch). The strips were tested for tensile properties on an Instron 5565 Universal Test Machine with a load cell of 5kN at a speed of 12.5 mm (0.5 inch) per minute. A total of eight samples were tested and the results averaged. Mechanical properties of the final composite structure are shown in Table 3.

### Example C

Resin coated kraft paper was prepared and tested as for Example 4 except that only the phenolic resin was used. The resin pick up was 36.1 weight percent 47 weight percent. Mechanical properties of the final composite structure are shown in Table 3.

**Table 3**

| Example | Tannin, % | Phenolic, % | Specific Stiffness, kN*m/g | Tensile Index, N*m/g | Specific Tensile Toughness, N*m2/g |
|---|---|---|---|---|---|
| 4 | 30 | 70 | 7.90 | 40 | 0.020 |
| C | 0 | 100 | 7.21 | 24 | 0.0077 |

### Example 5

Kevlar® paper as used in Example 3 was dipped into a bath comprising a resin blend of 30 weight percent tannin resin and 70 weight percent phenolic resin (based on solids). The resin composition on paper was then cured as per Example 1. The resin pick up was 45 weight percent. The final composite was then cut into strips and tested on tensile properties using the same method as in Example 4. Mechanical properties are shown in Table 4.

### Example D

Resin impregnated paper was prepared and tested as for Example 5 except that only the phenolic resin was used. The resin composition on paper was then cured as per Example 1. The resin pick up was 53 weight percent. The final composite was then cut into strips and tested on tensile properties using the same method as in example 4. Mechanical properties are shown in Table 4.

**Table 4**

| Example | Tannin, % | Phenolic, % | Specific Stiffness, kN*m/g | Tensile Index, N*m/g | Specific Tensile Toughness, N*m2/g |
|---|---|---|---|---|---|
| 5 | 30 | 70 | 9.64 | 86 | 0.062 |
| D | 0 | 100 | 8.80 | 77 | 0.053 |

As can be seen from the above examples, the addition of tannin resin to the phenolic resin resulted in a noticeable improvement (10 to 15 relative percent in these particular cases) in the limiting oxygen index value and, also, in mechanical properties (stiffness, strength, and toughness) of the coated or impregnated papers. Similar performance benefits will accrue in a honeycomb or folded core structure comprising such a resin treated paper.

## Claims

1. A structural core comprising a fibrous web and a matrix resin, the matrix resin comprising from 15 to 75 weight percent of the weight of web plus resin, the matrix resin contains:
(i) a first resin which is a tannin comprising 10 to 100 weight percent of the matrix resin; and
(ii) a second resin in the event tannin is not present in an amount of 100 weight percent.

2. The structure core of claim 1 wherein tannin is not present in an amount of 100 weight percent.

3. The structure core of claim 2 wherein the second resin comprises phenolic, benzoxazine, polyester, cyanate ester, bismaleimide, epoxy, polyimide, or combination thereof.

4. The structural core of claim 1 wherein the fibrous web comprises cellulose fibers.

5. The structural core of claim1 wherein the fibrous web comprises fibers with tenacity at least 3 grams per dtex.

6. The structural core of claim 1 wherein the fibrous web comprises fibers with tenacity at least 11 grams per dtex.

7. The structural core of claim1 wherein the tannin is gallic acid, mimosa, flavone or phloroglucinol.

8. The structural core of claim 1 wherein the web is paper, woven fabric, nonwoven fabric or unidirectional fabric.

9. The core of claim 1 wherein the core is in the form of a honeycomb structure.

10. The core of claim 1 wherein the core is in the form of a folded structure.

11. The structural core of claim 8 wherein the web is of paper comprising p-aramid, m-aramid, cellulose or mixtures thereof.

12. A composite panel comprising a core structure according to claim 1 and at least one facesheet attached to at least one exterior surface of the core structure.

13. The composite panel according to claim 12, wherein the facesheet is made from resin impregnated fiber, plastic or metal.

## Patentansprüche

1. Struktureller Kern, umfassend eine Faserbahn und ein Matrixharz, wobei das Matrixharz 15 bis 75 Gewichtsprozent des Gewichts von Bahn plus Harz umfasst, wobei das Matrixharz enthält:
(i) ein erstes Harz, das ein Tannin ist, umfassend 10 bis 100 Gewichtsprozent des Matrixharzes; und
(ii) ein zweites Harz in dem Fall, dass Tannin nicht in einer Menge von 100 Gewichtsprozent vorhanden ist.

2. Struktureller Kern nach Anspruch 1, wobei Tannin nicht in einer Menge von 100 Gewichtsprozent vorhanden ist.

3. Struktureller Kern nach Anspruch 2, wobei das zweite Harz Phenol, Benzoxazin, Polyester, Cyanatester, Bismaleimid, Epoxid, Polyimid oder eine Kombination davon umfasst.

4. Struktureller Kern nach Anspruch 1, wobei die Faserbahn Zellulosefasern umfasst.

5. Struktureller Kern nach Anspruch 1, wobei die Faserbahn Fasern mit einer Reißfestigkeit von mindestens 3 Gramm pro dtex umfasst.

6. Struktureller Kern nach Anspruch 1, wobei die Faserbahn Fasern mit einer Reißfestigkeit von mindestens 11 Gramm pro dtex umfasst.

7. Struktureller Kern nach Anspruch 1, wobei das Tannin Gallussäure, Mimose, Flavon oder Phloroglucin ist.

8. Struktureller Kern nach Anspruch 1, wobei die Bahn Papier, Gewebe, Vlies oder ein unidirektionales textiles Gebilde ist.

9. Kern nach Anspruch 1, wobei der Kern in der Form einer Wabenstruktur ist.

10. Kern nach Anspruch 1, wobei der Kern in der Form einer gefalteten Struktur ist.

11. Struktureller Kern nach Anspruch 8, wobei die Bahn aus Papier ist, umfassend p-Aramid, m-Aramid, Zellulose oder Gemische davon.

12. Verbundplatte, umfassend eine Kernstruktur nach Anspruch 1 und zumindest eine Außenlage, die an zumindest eine Außenfläche der Kernstruktur angefügt ist.

13. Verbundplatte nach Anspruch 12, wobei die Außenlage aus harzimprägnierter Faser, Kunststoff oder Metall gefertigt ist.

## Revendications

1. Noyau structurel comprenant un voile fibreux et une résine formant matrice, la résine formant matrice comprenant de 15 à 75 pour cent en poids du poids du voile plus de la résine, la résine formant matrice contient:
(i) une première résine qui est une tannine comprenant de 10 à 100 pour cent en poids de la résine formant matrice; et
(ii) une seconde résine dans le cas où la tannine n'est pas présente en une quantité de 100 pour cent en poids.

2. Noyau structurel selon la revendication 1 dans lequel la tannine n'est pas présente en une quantité de 100 pour cent en poids.

3. Noyau structurel selon la revendication 2 dans lequel la seconde résine comprend une résine phénolique, de la benzoxazine, un polyester, un ester cyanate, un bismaléimide, une résine époxy, un polyimide, ou une combinaison de ceux-ci.

4. Noyau structurel selon la revendication 1 dans lequel le voile fibreux comprend des fibres de cellulose.

5. Noyau structurel selon la revendication 1 dans lequel le voile fibreux comprend des fibres présentant une ténacité d'au moins 3 grammes par dtex.

6. Noyau structurel selon la revendication 1 dans lequel le voile fibreux comprend des fibres présentant une ténacité d'au moins 11 grammes par dtex.

7. Noyau structurel selon la revendication 1 dans lequel la tannine est l'acide gallique, le mimosa, la flavone ou le phloroglucinol.

8. Noyau structurel selon la revendication 1 dans lequel le voile est un papier, un textile tissé, un textile non-tissé ou un textile unidirectionnel.

9. Noyau selon la revendication 1 dans lequel le noyau se présente sous la forme d'une structure en nid d'abeille.

10. Noyau selon la revendication 1 dans lequel le noyau se présente sous la forme d'une structure pliée.

11. Noyau structurel selon la revendication 8 dans lequel le voile est du papier comprenant du p-aramide, du *m*-aramide, de la cellulose ou leurs mélanges.

12. Panneau composite comprenant une structure formant noyau selon la revendication 1 et au moins une feuille frontale fixée à au moins une surface extérieure de la structure formant noyau.

13. Panneau composite selon la revendication 12, dans lequel la feuille frontale est fabriquée à partir de fibre imprégnée de résine, de plastique ou de métal.
